Europäisches Patentamt

European Patent Office

Office européen des brevets

(19)

(11) Veröffentlichungsnummer : **0 073 855**
**B1**

(12) **EUROPÄISCHE PATENTSCHRIFT**

(45) Veröffentlichungstag der Patentschrift :
**18.06.86**

(51) Int. Cl.⁴ : **F 16 K   1/02**

(21) Anmeldenummer : **81110632.7**

(22) Anmeldetag : **21.12.81**

(54) **Absperrventil für Fluide.**

(30) Priorität : **03.09.81 YU 2120/81**

(43) Veröffentlichungstag der Anmeldung :
**16.03.83 Patentblatt 83/11**

(45) Bekanntmachung des Hinweises auf die Patenterteilung : **18.06.86 Patentblatt 86/25**

(84) Benannte Vertragsstaaten :
**AT BE CH DE FR GB IT LI LU NL SE**

(56) Entgegenhaltungen :
**CH-A-    90 144**
**DE-A- 2 715 218**
**DE-A- 2 930 691**
**DE-C- 1 046 971**
**US-A- 1 542 612**

(73) Patentinhaber : **Stanic, Miodrag**
**G. G. Deza 43/13**
**Novi Beograd (YU)**

(72) Erfinder : **Stanic, Miodrag**
**G. G. Deza 43/13**
**Novi Beograd (YU)**

(74) Vertreter : **Stoffregen, Hans-Herbert, Dr. Dipl.-Phys. et
al**
**Patentanwälte Strasse & Stoffregen Salzstrasse 11a**
**Postfach 2144**
**D-6450 Hanau/Main 1 (DE)**

## Beschreibung

Die Erfindung bezieht sich auf ein Absperrventil für Fluide, vorzugsweise für Sanitärarmaturen bestimmt, umfassend ein Ventilgehäuse, eine über ein Betätigungsorgan wie einen Handgriff axial verstellbare Ventilstange mit Ventilkegel, der auf einen Ventilsitz absenkbar und von diesem abhebbar ist, wobei der Ventilkegel stromaufwärts des Ventilsitzes angeordnet ist.

Ein entsprechendes Absperrventil in Form von vorzugsweise einem Wasserhahn ist der DE-A-29 30 691 zu entnehmen. Durch die Anordnung des Ventilkegels in Bezug auf den Ventilsitz und der Fluidströmungsrichtung wird unter anderem der Vorteil erzielt, daß der Druck des Fluids in Richtung des Absenkens an den Ventilkegel angreift, wodurch auch über lange Zeiträume eine sichere Absperrung gegeben sein soll. Um jedoch sicherzustellen, daß durch eine fortwährende von dem Handgriff hervorgerufene Druckbeaufschlagung auf den Ventilkegel ein unnötig schneller Verschleiß auftritt, um also eine kraftmäßige Entkupplung zwischen den durch das Fluid hervorgerufenen Kräften und denen zur manuellen Einstellung herbeizuführen, wird zwischen dem Ventilkegel und dem Handgriff ein elastisches Verbindungselement angeordnet. Dieses kann jedoch ein zu starkes Schließen oder Öffnen des Ventils nicht unterbinden. Neben dieser konstruktiv recht aufwendigen Variante befindet sich außerdem am Ventilstange ein Anschlagring, der sicherstellen soll, daß beim Überdrehen des Handgriffs eine unkontrollierte große Belastung zwischen Ventilkegel und Ventilsitz nicht auftritt, da andernfalls die erforderliche Dichtheit nach kurzer Zeit zerstört wird.

Neben dem zuvor geschilderten Absperrventil für Fluide sind weitere Absperrorgane in Form von zum Beispiel Wasserhähnen bekannt, bei denen zum Verschließen der Ventilkegel stromaufwärts auf den Ventilsitz abgesenkt und zum Beispiel durch die von einer Spindel hervorgerufene Kraft angepreßt wird. Umgekehrt wird das Ventil geöffnet, wenn der Ventilkegel von dem Ventilsitz in Strömungsrichtung des Fluids angehoben wird. Erkennbar ergeben sich bei einem entsprechenden Absperrventil, was heutzutage nahezu bei allen Sanitärarmaturen vorhanden ist, Dichtungsprobleme, so daß nach einem längeren Zeitraum der Benutzung nicht zu verhindern ist, daß ein Heraustropfen des Fluids aus dem Absperrventil auftritt. Weitere Nachteile einer entsprechenden Konstruktion zeigen sich dadurch, daß auftretende Druckstöße in der Fluidleitung zu Belastungen der einzelnen Elemente führt, die zu einem schnellen Verschleiß führen. Auch tritt der Nachteil auf, daß bei der Verwendung eines entsprechenden Wasserhahns zum Beispiel in einem Brauchwassernetz, in dem stark kalkhaltiges Wasser fließt, im Bereich von Ventilsitz und -kegel Kalkablagerungen auftreten, die dazu führen, daß zum Verschließen erhöhte Anpreßdrucke aufgebracht werden müssen, die unweigerlich zu einer schnellen Abnutzung und Undichtigkeit führen. Daher ist es erforderlich, häufig die durch Erosion oder Kavitation verschlissenen Gummidichtungen auszuwechseln.

Aufgabe der vorliegenden Erfindung ist es, ein Absperrventil für Fluide der eingangs genannten Art derart auszubilden, daß neben einer nahezu vollkommenen Dichtung auch über einen langen Zeitraum der Verschleiß der verwendeten Elemente überaus gering gehalten wird, wobei gleichzeitig sichergestellt sein soll, daß ein « Überdrehen » des Absperrventils nicht auftreten kann, daß also zwischen Ventilsitz und Ventilkegel nicht so hohe Anpreßdrucke auftreten können, die zu einer unbeabsichtigten Zerstörung führen.

Die Aufgabe wird erfindungsgemäß dadurch gelöst, daß die Ventilstange von einem Halteelement aufgenommen ist, das mittels eines zylinderförmig ausgebildeten Führungselements axial verschiebbar und gegenüber diesem verdrehgesichert ist, daß das Führungselement in seinem unteren Randbereich von dem Ventilgehäuse aufgenommen ist und mit seinem oberen Randbereich mit einem den Ventilsitz haltenden weiteren Element in Wechselwirkung tritt, daß das Führungselement zusammen mit dem Halteelement gegenüber dem den Ventilsitz aufweisenden Element und dem Ventilgehäuse dann verdrehbar ist, wenn das Halteelement eine Hubbegrenzung erreicht, und daß die Ventilstange gegenüber dem ihn aufnehmenden Halteelement um die Längsachse drehbar ist.

Nach dem erfindungsgemäßen Vorschlag bewegt sich folglich das Halteelement während des Schließ- und des Öffnungsvorganges nur axial, weil die Reibungskräfte zwischen dem Führungselement einerseits und dem Ventilgehäuse und dem den Ventilsitz haltenden Element andererseits eine Verdrehung verhindern, bis die Hubbegrenzung erreicht ist. Bei einem Weiterdrehen des Betätigungsorgans werden dann die Reibungskräfte überwunden, so daß das Halteelement zusammen mit dem Führungselement in Art einer « Rutschkupplung » gegenüber dem Ventilgehäuse und dem den Ventilsitz haltenden Element verdreht wird. Dabei sind auch die Reibungskräfte zwischen dem Ventilsitz und dem Ventilkegel größer als die Reibungskräfte zwischen der Ventilstange und dem Halteelement. Ebenfalls sind die Reibungskräfte zwischen dem Ventilsitz und dem zugeordneten Gegenstück wie Gewindesitz größer als die Reibungskräfte zwischen dem den Ventilsitz haltenden Element und Führungselement.

Das erfindungsgemäße Absperrventil setzt sich aus wenigen Einzelelementen zusammen, die nicht aus Messing, sondern aus Kunststoff wie zum Beispiel Lexan bestehen können, ohne daß man Gefahr laufen muß, daß die Funktionstüchtigkeit Einbuße erfährt.

Durch die einfachen konstruktiven Bauelemente und dem besonders hervorzuhebenden Werkstoff Kunststoff wird auch der Vorteil erzielt, daß die Fertigungskosten gegenüber den bekannten Absperrventilen stark reduziert werden, wobei gleichzeitig das Endprodukt im Vergleich zu dem Bekannten erheblich leichter ist, was sich zum Beispiel transport- und lagertechnisch als positiv erweist. Dabei ist das Ventilgehäuse und die Abmessung von dem den Ventilsitz aufnehmenden Element und dem Führungselement derart auf bekannte Armaturen abgestimmt, daß ein einfaches Umrüsten bekannter Sanitärarmaturen mit dem erfindungsgemäßen Absperrventil erfolgen kann. Das bedeutet, daß bei der Verwendung des erfindungsgemäßen Absperrventils zum Beispiel in Mischbatterien der Ventilsitz dichtend zum Beispiel an einem Gewindesitz der Armatur anliegt.

Ausgestaltungen der Erfindung ergeben sich aus den Ansprüchen 2-8.

Die Erfindung wird nachstehend anhand eines in der Zeichnung dargestellten bevorzugten Ausführungsbeispiels näher erläutert :

Es zeigen :

Figur 1  ein in eine Wasserarmatur eingebautes erfindungsgemäße Absperrventil und

Figur 2  das Absperrventil von Fig. 1 in vergrößerter Darstellung.

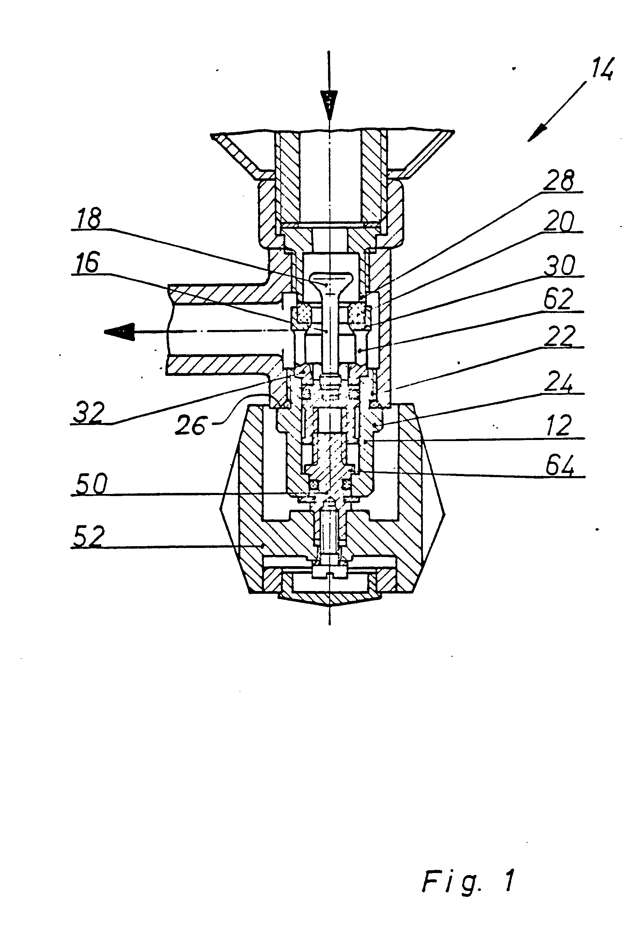

In Fig. 1 ist im Schnitt ein erfindungsgemäßes Absperrventil 10 eingebaut in einer Sanitärarmatur wie einem Wasserhahn 14 dargestellt, welches hinsichtlich seiner einzelnen Bestandteile nicht näher beschrieben werden muß, da der Einsatz nicht von speziellen Ausbildungen der Armaturen abhängig ist. Die Strömungsrichtung des die Armatur durchströmenden Fluids ist in der Fig. 1 durch die ausgezogenen Pfeile angedeutet.

Das Ventil 10 besteht im wesentlichen aus einem Ventilgehäuse 12, in dem axial verschiebbar ein Halteelement 40 aufgenommen ist, welches seinerseits eine Ventilstange 16 mit am freien Ende ausgebildeten Ventilkegel 18 aufweist. Der Ventilkegel 18 tritt mit einem Ventilsitz 20 in Wechselwirkung, wobei vorzugsweise der Ventilkegel 18 von der Ventilstange 16 ausgehend sich konisch vergrößert, um auf eine entsprechende Dichtungsfläche des Ventilsitzes 20 dichtend abgesenkt werden zu können. Wie die Fig. 1 verdeutlicht, ist das Ventilgehäuse 12 in die Sanitärarmatur 14 eingeschraubt. Zu diesem Zweck weist das Ventilgehäuse 12 in einem — vorzugsweise oberen — Bereich ein Gewinde 22 auf, dem ein entsprechendes Gegengewinde in der Sanitärarmatur zugeordnet ist. Das vorzugsweise hohlzylinderförmig ausgebildete Ventilgehäuse 12 weist ferner dem Gewinde 22 angrenzend einen umlaufenden Vorsprung 24 auf, der gegen einen Abschnitt 26 der Sanitärarmatur 14 zum Anliegen kommt, wenn das Ventilgehäuse im gewünschten Umfang in jene eingeschraubt ist. Sodann stellt der Abstand zwischen dem Vorsprung 24 und dem freien Ende des Ventilsitzes 20 sicher, daß dieser gegen ein Gegenstück im Sanitärbereich wie zum Beispiel ein Gewindesitz 28 fest zum Anliegen kommt, so daß das Fluid nur dann zur Auslaßöffnung strömen kann, wenn es durch den Bereich zwischen Ventilkegel 18 und Ventilsitz 20 hindurchfließt.

Zu den Abmessungen Ventilgehäuse 12 bzw. Vorsprung 24 und Ventilsitz 20 ist zu bemerken, daß diese der Armaturdimensionierung angepaßt sind, also auf zum Beispiel ein 1/2" oder 3/4" Gewinde abgestimmt sind.

Der Ventilsitz 20 wird von einem hohlzylinderförmig ausgebildeten Element 30 aufgenommen, welches seinerseits mit einem Führungselement 32 zusammenwirkt, welches ebenfalls hohlzylinderförmige Strukturen aufweist, jedoch in der Außenwandung eine Ausnehmung in Form einer Stufe 34 aufweist, um auf das Ventilgehäuse 12 derart aufgesetzt zu werden, daß sich ein Abschnitt 36 entlang der Innenwandung des Ventilgehäuses 12 erstreckt. Der freie ventilgehäuseinnenseitig gelegene Rand 38 des Führungselementes 32 stellt sodann eine Begrenzungsfläche für die axiale Verschiebung (Hubbewegung) des die Ventilstange 16 aufnehmenden Halteelementes 40 dar.

Um eine axiale Verschiebung des Halteelementes 40 und damit der Ventilstange 16 im Ventilgehäuse 12 sicherzustellen, wirkt das Halteelement 40 mit seinem oberen Abschnitt 42 mit dem Führungselement 32 zusammen, wobei der Innenquerschnitt des Führungselementes 32 unrund vorzugsweise oval oder gleichwirkend ausgebildet ist, dem der Querschnitt des oberen Abschnitts 42 entsprechend angepaßt ist.

Der sich an den oberen Abschnitt 42 anschließende (untere) Abschnitt 44, der entlang der Innenwandung des Ventilgehäuses 12 geführt ist, weist seinerseits eine koaxial angeordnete in Richtung des Ventilgehäusebodens ausgebildete Ausnehmung 46 auf, die mit einem Innengewinde 48 versehen ist, welches seinerseits mit einer Spindel 50 in Wechselwirkung tritt, die von einem Handgriff 52 betätigt wird. Das bedeutet, daß die Drehbewegung des Handgriffs 52 bzw. der Spindel 50 sodann durch das Zusammenwirken von dem oberen Abschnitt 42 des Halteelementes 40 und dem Führungselement 32 in eine translatorische Bewegung umgesetzt wird, wodurch eine Hubbewegung des Ventilkegels 18 vom Ventilsitz 20 weg oder zu diesem hin sichergestellt ist.

Um weitgehend eine Reibung zwischen dem Halteelement 40 und der Ventilinnenwandung bzw. zwischen der Öffnung des Führungselementes 32 und dem geführten oberen Abschnitt 42 des Halteelementes 40 herabzusetzen, wodurch eine Leichtgängigkeit des Absperrventils 10 gewährleistet ist, erweitert sich die Öffnung des Führungselementes 32 in Richtung des Ventilsitzes 20 konisch, so daß nur im unteren innerhalb des Ventilgehäuses liegenden Abschnitt des Führungselementes 32 eine Berührung mit dem in Wechselwirkung tretenden Abschnitt 42 des Halteelementes 40 erfolgt und die Außenummantelung des im Vergleich zum Abschnitt 42 einen größeren Außendurchmesser aufweisenden Abschnitts 44 weist Ausnehmungen 54 auf, so daß nur ein geringer Bereich der Außenwandung des Abschnitts 44 an die Innenwandung des Ventilgehäuses zu liegen kommt. Auch kann der Abschnitt 44 mit einer umlaufenden Nut 56 versehen sein, in die ein Dichtungsring einlegbar ist.

Ferner wird aus den die Erfindung überaus klar erkennenlassenden Darstellungen ersichtlich, daß das Ventilgehäuse 12, die Spindel 50, das Halteelement 40, das Führungselement 32, das den Ventilsitz 20 aufnehmende Element 30 und die Ventilstange 16 entlang derselben Hauptachse, also koaxial angeordnet ist.

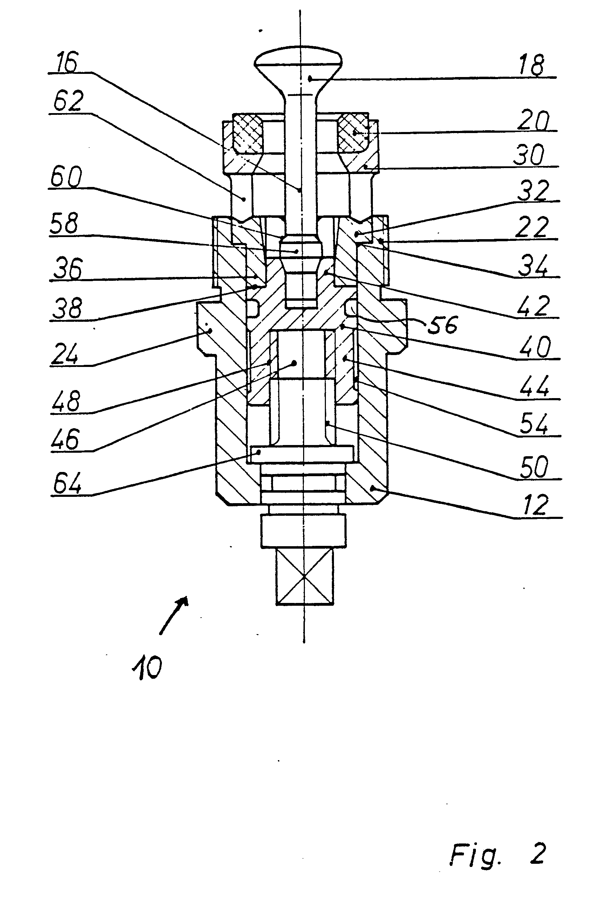

Im Ausführungsbeispiel der Fig. 1 und 2 erfolgt die Verbindung zwischen der Ventilstange 16 und dem ihn aufnehmenden Halteelement 40 in Form einer Schnappverbindung. Zu diesem Zweck weist die Ventilstange 16 an seinem unteren freien Ende eine wulstförmig ausgebildete Verstärkung 58 auf, die in eine entsprechend ausgebildete axial angeordnete Ausnehmung 60 im Halteelement 40 einrastet. Zu diesem Zweck gehen von der Ausnehmung 60 nicht dargestellte Schlitze zur freien Stirnseite des oberen Abschnitts 42 aus, wodurch ein einfaches Einbringen der Ventilstange 16 in die Ausnehmung 60 gewährleistet ist.

Durch die lösbare Verbindung zwischen der Ventilstange 16 und dem Halteelement 40 ist sichergestellt, daß eine Relativbewegung zwischen den einzelnen Elementen erfolgt, wodurch selbst dann eine gute Abdichtung zwischen Ventilsitz 20 und Ventilkegel 18 gegeben ist, wenn sich zum Beispiel in diesem Bereich geringe Kalbablagerungen ergeben sollten, weil dann der Ventilkegel 18 gegenüber dem Ventilsitz 20 verkantbar ist, was bei einer starren Verbindung zwischen Halteelement 40 und Ventilstange 16 kaum möglich ist. Allerdings ist auch die zuletzt aufgezeigte Verbindungsmöglichkeit ohne weiteres realisierbar.

Damit das das erfindungsgemäße Absperrventil 10 durchströmende Fluid zum Ausfluß gelangen kann, weist das den Ventilsitz 20 aufnehmende Element 30 in seiner Wandung Fluiddurchlässe 62 auf. Selbstverständlich könnte auch das Führungselement 32 sich weiter in Richtung des Ventilsitzes 20 erstrecken, so daß in seiner Wandung durchgehende Ausnehmungen vorgesehen sein könnten, durch die das Fluid strömt.

Ferner sei in den Ausführungsbeispielen auf den Übergang zwischen dem Führungselement 32 und dem den Ventilsitz aufnehmenden Element 30 besonders hingewiesen. Wie die Schnittdarstellung verdeutlicht, ist der obere freie Randbereich des Führungselementes 32 V-förmig ausgebildet, dem der untere freie Rand des Elementes 30 entsprechend angepaßt ist. Durch diese Ausbildung ist sichergestellt, daß sich eine Relativbewegung zwischen dem Führungselement 32 und den angrenzenden Elementen, also dem Ventilgehäuse 12 und dem Element 30 ergibt.

Die Funktionsweise des erfindungsgemäßen Absperrventils sei nun nachstehend näher erläutert.

Durch Bewegung des Handgriffs 52 und damit der Spindel 50 und dem Zusammenwirken zwischen Spindel 50 und dem Innengewinde 48 des Halteelementes 40 erfolgt eine Hubbewegung von diesem und damit von der Ventilstange 16. Dabei wird die Hubbewegung auf der einen Seite durch den inneren Rand 38 des Führungselementes 32 und durch einen am Boden des Ventilgehäuses 12 angrenzenden Vorsprung 64 an der Spindel 50 begrenzt. Nehmen wir an, daß durch Linksdrehung des Handgriffs 52 eine Bewegung des Halteelementes 40 in Richtung auf das Führungselement 32 zu, also entgegen der Strömungsrichtung erfolgt, so hebt sich der Ventilkegel 18 vom Ventilsitz 20 ab und das Fluid kann zwischen diesen Elementen durch die Durchlässe 62 zum Auslaß hin strömen. Je mehr das Halteelement 40 in Richtung auf den Absatz oder unteren Rand 38 des Führungselementes 32 bewegt wird, um so mehr Fluid kann zum Auslaß gelangen. Sobald der stufenförmig ausgebildete Übergang zwischen den Abschnitten 42 und 44 des Halteelementes 40 gegen den Rand 38 stößt, ist eine weitere Hubbewegung nicht mehr möglich, d. h., daß der maximale Fluiddurchlaß gegeben ist. Bei üblichen Wasserhähnen würde sodann eine weitere Drehung des Wasserhahns nicht mehr möglich werden. Durch die erfindungsgemäße Ausgestaltung des Absperrventils 10 hinsichtlich der Anordnung des Führungselementes 32 zu dem Element 30 bzw. dem Ventilgehäuse 12 besteht nun dennoch die Möglichkeit, daß eine weitere Drehung des Handgriffs 52 erfolgt, ohne daß das Ventil beschädigt wird. Das Führungselement 32 kann nämlich dann zwischen dem Element 30 und dem Ventilgehäuse 12 in Art einer Rutschkupplung bewegt werden, was durch die spezielle Ausgestaltung der aneinandergrenzenden bzw. ineinandergreifenden Randbereiche der Element 30 und 32 erleichtert wird. Allerdings kann diese Rutschbewegung erst dann erfolgen, wenn das Halteelement 40 in seiner oberen Grenzstellung angelangt ist, da vorher die von der Spindel auf das Halteelement ausgeübten Kräfte nicht ausreichen.

Durch Rechtsdrehen wird sodann umgehend — selbst wenn man beim Aufdrehen den Handgriff 52 « überdreht » hat — ein sofortiges Reduzieren des Fluiddurchflusses gewährleistet, in dem das Halteelement 40 und die mit diesem stets verbundene Ventilstange 16 in Strömungsrichtung bewegt wird. Die translatorische Abwärtsbewegung kann soweit erfolgen, bis der Ventilkegel 18 dicht am Ventilsitz 20 anliegt. Sodann wird die Dichtwirkung durch die Druckbeaufschlagung des Fluids auf die freie dem Fluid zugewandte Oberfläche des Ventilkegels erhöht. Durch weitere Rechtsdrehung des Handgriffs 52 erfolgt eine zulässige Belastung des den Ventilsitz 20 aufnehmenden Elementes 30, und zwar so lange, bis das freie untere Ende des Halteelementes 40 an den Vorsprung 64 der Spindel 50 zu liegen kommt. Die Begrenzung der in Fluidrichtung gerichteten Hubbewegung der Ventilstange 16 bzw. des Halteelementes 40 ist dann gegeben. Sollte nun versucht werden, den Handgriff weiterzudrehen, eine Angewohnheit, die bei bekannten Wasserhähnen häufig zu beobachten ist, weil man dadurch eine bessere Dichtigkeit hervorrufen will, so wird keine weitere axiale Richtungsverschiebung des Halteelementes 40 und damit der Ventilstange 16 herbeigeführt, was sonst zu einer Zerstörung der Dichtelemente führen würde, sondern vielmehr gelangt das Führungselement 32 erneut in eine relative Drehbewegung zu dem Ventilgehäuse 12 und dem den Ventilsitz 20 aufnehmenden Element 30, so daß das Halteelement 40 mittels des Handgriffs 52 bzw. der Spindel 50 weiter verdreht werden kann, ohne daß eine zusätzliche Druckbeaufschlagung des Ventilkegels 18 in Richtung des Ventilsitzes 20 erfolgt.

Mit anderen Worten wird die zulässige Belastung der Abdichtung in dem erfindungsgemäßen Absperrventil stets gewahrt, auch dann, wenn das das Absperrventil 10 beeinflussende Betätigungsorgan « überdreht » werden sollte.

Ist im Ausführungsbeispiel die Erfindung anhand einer Sanitärarmatur beschrieben, so ist selbstverständlich ein Einsatz in anderen Gebieten auch möglich. Als bevorzugte Einsatzgebiete seien chemische oder physikalische Laboratorien genannt, bei denen das Absperrventil zum Regulieren flüssiger und gasförmiger Fluide ohne Schwierigkeiten einsetzbar ist. Insbesondere der Umstand, daß die Elemente aus Kunststoff bestehen, stellt sicher, daß auch ein Einsatz dort erfolgen kann, wo aggressive Fluide Verwendung finden. Da nur ein überaus geringer Verschleiß zu beobachten ist und außerdem ein Überdrehen des Absperrorgans ausgeschlossen ist, ist nicht nur eine wartungsfreier Betrieb möglich, sondern auch aufgrund der sicheren Übertragung von Rotations- in Translationsbewegung stets gewährleistet, daß eine feine und gleichbleibende Dosierung der Fluide erfolgt.

Auch sei ergänzend erwähnt, daß selbstverständlich das Führungselement in Bezug auf das Ventilgehäuse bodenseitig angeordnet sein kann, um dort gegenüber diesem dann verdreht zu werden, wenn die Ventilstange über eine Endstellung hinaus « verschoben » werden soll.

**Patentansprüche**

1. Absperrventil (10) für Fluide, vorzugsweise für Sanitärarmaturen bestimmt, umfassend ein Ventilgehäuse (12), eine über ein Betätigungsorgan wie einen Handgriff (52) axial verstellbare Ventilstange (16) mit Ventilkegel (18), der auf einen Ventilsitz (20) absenkbar und von diesem abhebbar ist, wobei der Ventilkegel stromaufwärts des Ventilsitzes angeordnet ist, dadurch gekennzeichnet, daß die Ventilstange (16) von einem Halteelement (40) aufgenommen ist, das mittels eines zylinderförmig ausgebildeten Führungselements (32) axial verschiebbar und gegenüber diesem verdrehgesichert ist, daß das Führungselement in seinem unteren Randbereich (36) von dem Ventilgehäuse (12) aufgenommen ist und mit seinem oberen Randbereich mit einem den Ventilsitz (20) haltenden weiteren Element (30) in Wechselwirkung tritt, daß das Führungselement (32) zusammen mit dem Halteelement (40) gegenüber dem den Ventilsitz (20) aufweisenden Element (30) und dem Ventilgehäuse (12) dann verdrehbar ist, wenn das Halteelement (40) eine Hubbegrenzung erreicht, und daß die Ventilstange (16) gegenüber dem ihn aufnehmenden Halteelement (40) um die Längsachse drehbar ist.

2. Absperrventil nach Anspruch 1, dadurch gekennzeichnet, daß das Halteelement (40) sich im wesentlichen aus zwei unterschiedliche Durchmesser aufweisenden zylinderförmigen Hauptabschnitten (42, 44) zusammensetzt, von denen der den kleineren Durchmesser aufweisende Abschnitt (42) mit dem Führungselement (32) in Wechselwirkung tritt und der andere Abschnitt (44) entlang der Innenwandung des im wesentlichen als Hohlzylinder ausgebildeten Ventilgehäuses (12) geführt ist, wobei die axiale stromaufwärts gerichtete Verschiebung des Halteelementes durch den als Stufe ausgebildeten gegen den unteren Rand des sich innerhalb des Ventilkörpers erstreckenden Bereichs des Führungselementes stoßenden Übergang (38) begrenzbar ist.

3. Absperrventil nach Anspruch 1, dadurch gekennzeichnet, daß der Innenraum des Führungselementes (32) im Querschnitt unrund vorzugsweise oval ausgebildet ist, dem der Querschnitt des den kleineren Durchmesser aufweisenden Hauptabschnitts (42) des Halteelementes (40) entspricht.

4. Absperrventil nach Anspruch 3, dadurch gekennzeichnet, daß sich der Innenraum des Führungselementes (32) in Richtung des Ventilsitzes (20) erweitert.

5. Absperrventil nach Anspruch 1, dadurch gekennzeichnet, daß das den Ventilsitz (20) aufweisende Element (30) hohlzylinderförmig ausgebildet ist, wobei die Wandung zum Durchlassen des Fluids Durchbrüche (62) aufweist.

6. Absperrventil nach Anspruch 1, dadurch gekennzeichnet, daß der obere freie Rand des Führungselementes (32) konkav oder konkavähnlich ausgebildet ist, dem der untere entsprechend konvex oder konvexähnlich ausgebildete freie Rand des den Ventilsitz (20) aufnehmenden Elementes (30) zugeordnet ist.

7. Absperrventil nach Anspruch 1 und/oder Anspruch 2, dadurch gekennzeichnet, daß der untere den größeren Durchmesser aufweisende Hauptabschnitt (44) des Halteelementes (40) einen ein Gewinde (48) aufweisenden offenen koaxial angeordneten zylinderförmigen Hohlraum (46) aufweist, in den eine von dem Handgriff (52) betätigte Spindel (50) zur im wesentlichen axialen Verschiebung des Halteelementes (40) eingreift, wobei die axiale stromabwärts gerichtete Bewegung vorzugsweise von einem an der Spindel angeordneten Vorsprung (64) begrenzbar ist.

8. Absperrventil nach Anspruch 1, dadurch gekennzeichnet, daß die Ventilstange (16) in dem dem Ventilteller (18) gegenüberliegenden Bereich eine umlaufende Verstärkung wie einen Wulst (58) aufweist, der in eine entsprechend ausgebildete axial im Halteelement (40) angeordnete Ausnehmung (60) einrastbar ist, wobei vorzugsweise von der Ausnehmung zur freien Stirnseite des oberen Hauptabschnitts des Halteelementes zumindest ein durchgehender Schlitz verläuft.

## Claims

1. Stop valve (10) for fluids, preferably intended for sanitation fittings, comprising a valve housing (12), a valve rod (16) with valve head (18) axially adjustable via an operating element such as a handle (52), said valve head being such that it can be lowered to or raised from a valve seat (20), the valve head being arranged up-stream from the valve seat, characterised in that the valve rod (16) is held by a holding element (40) which is axially displaceable by means of a cylinder shaped guide element (32) and is non-rotatable respective to said guide element, that the guide element is held in its lower end area (36) by the valve housing (12) and with its upper end area interacts with a further element (30) holding the valve seat (20), that the guide element (32) together with the holding element (40) opposite the element (3) having the valve seat (20) and the valve housing (12) can be then rotated when the holding element (40) reaches a lift barrier, and that the valve rod (16) opposite the holding element (40) holding the valve seat is rotatable around the longitudinal axis.

2. Stop valve according to claim 1 characterised in that principally the holding element (40) is comprised of two cylinder shaped main sections (42, 44) of varying diameter, of which the section (42) with the smaller diameter interacts with the guide element (32) and the other section (44) is extended along the inner wall of the valve housing (12) which is principally configured as a hollow cylinder, whereby the axial displacement of the holding element against the direction of flow is limitable by the transition (38) that is configured as a step and abuts against the lower edge of the area of the guide element that extends within the valve body.

3. Stop valve according to claim 1 characterised in that the interior space of the guide element (32) is in cross-section preferably non-round but oval, to which the cross-section of the main section (42) of the holding element (40) with the smaller diameter corresponds.

4. Stop valve according to claim 3 characterised in that the interior of the guide element (32) extends in the direction of the valve seat (20).

5. Stop valve according to claim 1 characterised in that the element (30) having the valve seat (20) is shaped as a hollow cylinder in which the wall has passages (62) to permit the passage of the fluid.

6. Stop valve according to claim 1 characterised in that the upper free edge of the guide element (32) has a concave or concave-like configuration, which the lower, correspondingly convex or convex-like shaped free edge of the element (30) holding the valve seat (20) is allocated to.

7. Stop valve according to claim 1 and/or claim 2 characterised in that the lower main section (44) of the holding element (40) with the larger diameter has an open, coaxially arranged cylinder-shaped, hollow chamber (46) which has a thread (48) in which a shaft (50) penetrates for the displacement — in the main axially — of the holding element (40), whereby the axial movement in the direction of flow is preferably limitable by a protrusion (64) arranged on the shaft.

8. Stop valve according to claim 1 characterised in that the valve rod (16) in the area opposite the valve plate (18) has a circular reinforcement in the form of a bulge (58) which can be clicked into a correspondingly shaped aperture (60) arranged axially on the holding element (40), whereby at least a continuous slot runs preferably from the aperture to the free front side of the upper main section of the holding element.

## Revendications

1. Soupape d'arrêt (10) pour fluides, de préférence destinée à la robinetterie sanitaire, qui comprend une cage de soupape (12), une tige de soupape (16) pourvue d'un cône de soupape (18), réglable en sens axial à l'aide d'un organe de manœuvre tel qu'une poignée (52) ; le cône est disposé en amont du siège de soupape et il est possible de le faire descendre jusqu'au siège de soupape (20) et de l'en relevé, caractérisée par le fait que la tige de soupape (16) est placée à l'intérieur d'un élément de maintien (40) qui est déplaçable en sens axial par un élément de guidage (32) de forme cylindrique, et protégé contre tout effet de torsion pouvant provenir de celui-ci, que la zone marginale inférieure (36) de l'élément de guidage est enveloppée par la cage de soupape (12), et que sa zone marginale supérieure entre en interaction avec un autre élément (30) qui maintient le siège de soupape (20), que, ensemble avec l'élément de maintien (40), l'élément de guidage (32) admet d'être réglé par rapport à l'élément (30) comportant le siège de soupape (20) et la cage de soupape (12) en lui faisant effectuer un mouvement tournant, au moment où l'élément de maintien (40) atteint une limite de course, et que la tige de soupape (16) peut être tournée autour de son axe longitudinal par rapport à l'élément de maintien (40) à l'intérieur duquel elle se trouve.

2. Soupape d'arrêt d'après la revendication 1, caractérisée par le fait que l'élément de maintien (40) est essentiellement composé de deux parties principales (42, 44), de forme cylindrique et de diamètre différent, dont la partie de plus petit diamètre (42) entre en interaction avec l'élément de guidage (32), et que l'autre partie (44) est conduit essentiellement le long de la paroi intérieure de la cage de soupape (12), essentiellement développée en cylindre creux, le déplacement axial en amont de l'élément de maintien pouvant être limité par le passage (38) qui bute contre le bord inférieur de la zone de l'élément de guidage, située à l'intérieur de la cage de soupape.

3. Soupape d'arrêt d'après la revendication 1, caractérisée par le fait que la section de l'espace intérieur de l'élément de guidage (32) est développée en faux rond, de préférence de forme ovale, en concordance avec la section de la partie principale (42) de plus petit diamètre de l'élément de maintien (40).

4. Soupape d'arrêt d'après la revendication 3, caractérisée par le fait que l'espace intérieur de l'élément de guidage (32) s'élargit en direction du siège de soupape (20).

5. Soupape d'arrêt d'après la revendication 1, caractérisée par le fait que l'élément (30), où se trouve le siège de soupape (20), est développé en forme de cylindre creux dont la paroi comporte des orifices (62) pour permettre le passage du fluide.

6. Soupape d'arrêt d'après la revendication 1, caractérisée par le fait que le bord supérieur libre de l'élément de guidage (32) possède une forme concave ou similaire, en concordance avec le bord inférieur libre convexe ou similaire de l'élément (30) qui accueille le siège de soupape (20).

7. Soupape d'arrêt d'après la revendication 1 et/ou la revendication 2, caractérisée par le fait que la partie principale inférieure (44) de l'élément de maintien (40), ayant le plus grand diamètre, possède un espace creux ouvert (46), de forme cylindrique, en position coaxiale, avec un filetage (48), où s'engrène une broche (50), actionnée par la poignée (52) pour provoquer le déplacement, pour l'essentiel axial, de l'élément de maintien (40) ; ce mouvement axial, dirigé en aval, peut être limité, de préférence par une saillie (64), disposée sur la broche.

8. Soupape d'arrêt d'après la revendication 1, caractérisée par le fait que dans la zone se trouvant en face de la tête de soupape (18), la tige de soupape (16) possède un renforcement continu tel qu'un bourrelet (58) qui peut être encliqueté dans un creux (60), développé de façon correspondante en position axiale dans l'élément de maintien (40), où se trouve de préférence au moins une fente continue allant du creux à la face frontale libre de la partie principale supérieure de l'élément de maintien.

Fig. 1

Fig. 2